# EUROPEAN PATENT APPLICATION

(11) **EP 4 654 693 A1**
(43) Date of publication of application: **26.11.2025**
(21) Application number: 23916808.1
(22) Date of filing: 19.01.2023
(51) Int. Cl.: H04W 68/00

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2023/073249
(87) International publication number: WO 2024/152329

(57) **Abstract**

Provided in the present disclosure are a communication method and apparatus, and a storage medium. The method is executed by a first access network device, and comprises: receiving a first message from a core network device, wherein the first message is used for indicating that a terminal device is expected to enter a connected state from a deactivated state. By means of the method in the present disclosure, a core network can know the reachability of a terminal device on an RAN side in a timely manner.

## Description

### TECHNICAL FIELD

The present disclosure relates to the field of wireless communication technologies, and more particularly relates to a communication method, a communication apparatus, and a storage medium.

### BACKGROUND

In a research of service & system aspects working group 2 (SA2) of the 3rd generation partnership project (3GPP), a core network has implemented a core network based mobile terminal communication function for scenarios supporting durations above 10.24 s for non-inactive users. The core network based mobile terminal communication function requires timely notification to the core network regarding a reachability of a user equipment (UE) on a radio access network (RAN) side.

Currently, no specific provisions are made for a procedure by which the core network obtains the reachability of the UE on the RAN side in the communication standards. For a core network based mobile terminal communication, how to inform the core network of the reachability of the UE is an urgent problem to be solved.

### SUMMARY

The present disclosure provides a communication method, a communication apparatus and a storage medium, so that a core network timely learns a reachability of a UE on an RAN side.

In a first aspect, the present disclosure provides a communication method. The method is performed by a first access network device. The above method includes: receiving a first message from a core network device. The first message indicates that a UE is expected to enter a connected state from an inactive state.

In one or more possible implementations, the above method may further include: sending a first response message to the core network device according to the first message. The first response message indicates whether the UE enters the connected state from the inactive state.

In one or more possible implementations, in a case where the first response message indicates that the UE has not entered the connected state from the inactive state, the first response message may include at least one of: a failure reason or a paging time. The failure reason indicates a reason why the UE cannot enter the connected state from the inactive state. The paging time indicates a time when the core network device performs a paging on the UE.

In one or more possible implementations, the first message may be one of: a next generation application protocol (NGAP) message or a user plane part of general packet radio service tunneling protocol (GTP-U) message.

In one or more possible implementations, the NGAP message may include a non-UE associated message.

In one or more possible implementations, the non-UE associated message may include a paging message.

In one or more possible implementations, the NGAP message may include a UE associated message.

In one or more possible implementations, the UE associated message may include a downlink non-access stratum transmission message.

In one or more possible implementations, the first response message may be one of: an NGAP message or a GTP-U message.

In one or more possible implementations, the above method may further include: sending a second message to a second access network device according to the first message. The second message indicates that the UE is expected to enter the connected state from the inactive state.

In one or more possible implementations, the above method may further include: receiving a second response message sent by the second access network device in response to the second message. The second response message indicates whether the UE enters the connected state from the inactive state.

In one or more possible implementations, the second message may be a paging message, and the second message may include a paging reason. The paging reason is the UE being expected to enter the connected state from the inactive state.

In one or more possible implementations, the second message may be a paging message, and the second message may include indication information. The indication information indicates that the UE is expected to enter the connected state from the inactive state.

In a second aspect, the present disclosure provides a communication method. The method is performed by a core network device. The above method includes: sending a first message to a first access network device. The first message indicates that a UE is expected to enter a connected state from an inactive state.

In one or more possible implementations, the method may further include: receiving a first response message sent by the first access network device in response to the first message. The first response message indicates whether the UE enters the connected state from the inactive state.

In one or more possible implementations, in a case where the first response message indicates that the UE has not entered the connected state from the inactive state, the first response message may include at least one of: a failure reason or a paging time. The failure reason indicates a reason why the UE cannot enter the connected state from the inactive state. The paging time indicates a time when the core network device performs a paging on the UE.

In one or more possible implementations, the first message may be one of: an NGAP message or a GTP-U message.

In one or more possible implementations, the NGAP message may include a non-UE associated message.

In one or more possible implementations, the non-UE associated message may include a paging message.

In one or more possible implementations, the NGAP message may include a UE associated message.

In one or more possible implementations, the UE associated message may include a downlink non-access stratum transmission message.

In one or more possible implementations, the first response message may be one of: an NGAP message or a GTP-U message.

In a third aspect, the present disclosure provides a communication method. The method is performed by a second access network device. The above method includes: receiving a second message from a first access network device. The second message indicates that a UE is expected to enter a connected state from an inactive state.

In one or more possible implementations, the above method may further include: sending a second response message to the first access network device according to the second message. The second response message indicates whether the UE enters the connected state from the inactive state.

In one or more possible implementations, the second message may be a paging message, and the second message may include a paging reason. The paging reason is the UE being expected to enter the connected state from the inactive state.

In one or more possible implementations, the second message may be a paging message, and the second message may include indication information. The indication information indicates that the UE is expected to enter the connected state from the inactive state.

In a fourth aspect, the present disclosure provides a communication apparatus. The apparatus is arranged in a first access network device. The above apparatus includes a receiving module. The receiving module is configured to receive a first message from a core network device. The first message indicates that a UE is expected to enter a connected state from an inactive state.

In one or more possible implementations, the above apparatus may further include a sending module. The sending module is configured to send a first response message to the core network device according to the first message. The first response message indicates whether the UE enters the connected state from the inactive state.

In one or more possible implementations, in a case where the first response message indicates that the UE has not entered the connected state from the inactive state, the first response message may include at least one of: a failure reason or a paging time. The failure reason indicates a reason why the UE cannot enter the connected state from the inactive state. The paging time indicates a time when the core network device performs a paging on the UE.

In one or more possible implementations, the first message may be one of: an NGAP message or a GTP-U message.

In one or more possible implementations, the NGAP message may include a non-UE associated message.

In one or more possible implementations, the non-UE associated message may include a paging message.

In one or more possible implementations, the NGAP message may include a UE associated message.

In one or more possible implementations, the UE associated message may include a downlink non-access stratum transmission message.

In one or more possible implementations, the first response message may be one of: an NGAP message or a GTP-U message.

In one or more possible implementations, the sending module may be further configured to send a second message to a second access network device according to the first message. The second message indicates that the UE is expected to enter the connected state from the inactive state.

In one or more possible implementations, the receiving module may be further configured to receive a second response message sent by the second access network device in response to the second message. The second response message indicates whether the UE enters the connected state from the inactive state.

In one or more possible implementations, the second message may be a paging message, and the second message may include a paging reason. The paging reason is the UE being expected to enter the connected state from the inactive state.

In one or more possible implementations, the second message may be a paging message, and the second message may include indication information. The indication information indicates that the UE is expected to enter the connected state from the inactive state.

In a fifth aspect, the present disclosure provides a communication apparatus. The apparatus is arranged in a core network device. The above apparatus includes a sending module. The sending module is configured to send a first message to a first access network device. The first message indicates that a UE is expected to enter a connected state from an inactive state.

In one or more possible implementations, the above apparatus may further include a receiving module. The receiving module is configured to receive a first response message sent by the first access network device in response to the first message. The first response message indicates whether the UE enters the connected state from the inactive state.

In one or more possible implementations, in a case where the first response message indicates that the UE has not entered the connected state from the inactive state, the first response message may include at least one of: a failure reason or a paging time. The failure reason indicates a reason why the UE cannot enter the connected state from the inactive state. The paging time indicates a time when the core network device performs a paging on the UE.

In one or more possible implementations, the first message may be one of: an NGAP message or a GTP-U message.

In one or more possible implementations, the NGAP message may include a non-UE associated message.

In one or more possible implementations, the non-UE associated message may include a paging message.

In one or more possible implementations, the NGAP message may include a UE associated message.

In one or more possible implementations, the UE associated message may include a downlink non-access stratum transmission message.

In one or more possible implementations, the first response message may be one of: an NGAP message or a GTP-U message.

In a sixth aspect, the present disclosure provides a communication apparatus. The communication apparatus is arranged in a second access network device. The above apparatus may include a receiving module. The receiving module is configured to receive a second message from a first access network device. The second message indicates that a UE is expected to enter a connected state from an inactive state.

In one or more possible implementations, the above apparatus may further include a sending module. The sending module is configured to send a second response message to the first access network device according to the second message. The second response message indicates whether the UE enters the connected state from the inactive state.

In one or more possible implementations, the second message may be a paging message, and the second message may include a paging reason. The paging reason is the UE being expected to enter the connected state from the inactive state.

In one or more possible implementations, the second message may be a paging message, and the second message may include indication information. The indication information indicates that the UE is expected to enter the connected state from the inactive state.

In a seventh aspect, the present disclosure provides an access network device. The access network device may include a memory and a processor. The memory is configured to store computer-executable instructions. The processor is connected to the memory. The memory is configured to execute the computer-executable instructions stored on the memory to implement the communication method according to the first aspect, the third aspect, and possible implementations thereof.

In an eighth aspect, the present disclosure provides a core network device. The core network device may include a memory and a processor. The memory is configured to store computer-executable instructions. The processor is connected to the memory. The memory is configured to execute the computer-executable instructions stored on the memory to implement the communication method according to the second aspect and possible implementations thereof.

In a ninth aspect, the present disclosure provides a computer-readable storage medium. The computer-readable storage medium has stored thereon computer-executable instructions. The computer-executable instructions enable the communication method according to the first aspect, the second aspect, the third aspect, and possible implementations thereof to be implemented after executed by a processor.

In a tenth aspect, the present disclosure provides a computer program product. The computer program product includes one or more computer-executable instructions. The computer-executable instructions enable the communication method according to the first aspect, the second aspect, the third aspect, and possible implementations thereof to be implemented after executed by a processor.

In the present disclosure, the first message sent by the core network device to the first access network device and/or the second message sent by the first access network device to the second access network device indicate that the UE is expected to enter the connected state from the inactive state. By sending the first message and/or the second message, the core network device may confirm with the access network device whether the UE enters the connected state from the inactive state. In this way, the core network device may timely learn the reachability of the UE on the RAN side when needed, so that downlink data may be buffered to avoid data loss.

It should be understood that technical solutions of the fourth to ninth aspects of the present disclosure are consistent with those of the first to third aspects of the present disclosure, and beneficial effects achieved by each aspect and corresponding feasible implementations are similar and will not be repeated here.

### BRIEF DESCRIPTION OF THE DRAWINGS

FIG. 1 is a schematic diagram of a communication system in embodiments of the present disclosure.
FIG. 2 is a schematic flowchart of a first illustrative embodiment of a communication method in embodiments of the present disclosure.
FIG. 3 is a schematic flowchart of a second illustrative embodiment of a communication method in embodiments of the present disclosure.
FIG. 4 is a schematic block diagram of a communication apparatus in embodiments of the present disclosure.
FIG. 5 is a schematic block diagram of a network device in embodiments of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the disclosure. Instead, they are merely examples of methods, apparatuses, devices, and the like consistent with some aspects of embodiments of the disclosure as recited in the appended claims. Terms used herein in the embodiments of the present disclosure are only for the purpose of describing specific embodiments, but should not be construed to limit embodiments of the present disclosure. As used in the embodiments of the present disclosure and the appended claims, "a/an" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, "first information" may also be referred to as "second information", and similarly, the "second information" may also be referred to as the "first information", without departing from the scope of embodiments of the present disclosure. As used herein, the term "if" may be construed to mean "in case that", "when", "upon", "in response to determining" or "in a case where" depending on the context.

Furthermore, in the description of embodiments of the present disclosure, "and/or" merely describes an associated relationship of associated objects, and means that three relationships may exist. For example, A and/or B may mean that the following three situations exist: A exists alone, B exists alone, and A and B exist at the same time. In addition, in the description of embodiments of the present disclosure, "a plurality of" may refer to two or more than two.

Embodiments of the present disclosure are applicable to a communication system. The communication system may adopt 4G, 5G, or 6G communication technologies, or future evolution versions of communication technologies. In the embodiments of the present disclosure, a 5G communication system is taken as an example for the description.

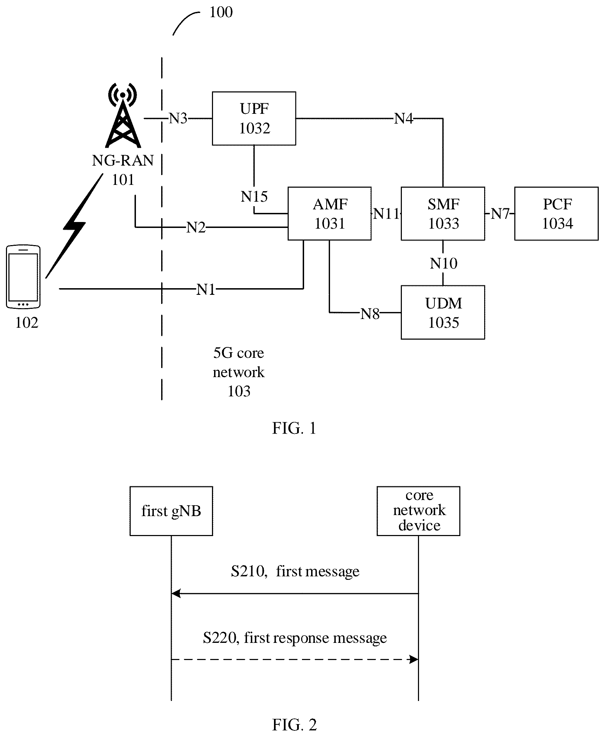

FIG. 1 is a schematic diagram of a communication system in embodiments of the present disclosure. As shown in FIG. 1, the communication system 100 may include an RAN and a core network (CN). The RAN may include a next generation radio access network (NG-RAN) 101. The NG-RAN 101 communicates with a terminal 102 via a Uu interface. The CN 103 may include: an access and mobility management function (AMF) 1031, a user plane function (UPF) 1032, a session management function (SMF) 1033, a policy control function (PCF) 1034, a unified data management (UDM) 1035, and the like. In the embodiments of the present disclosure, the above communication system may further include other network elements, which are not specifically limited in the embodiments of the present disclosure.

In the above communication system, the terminal may access the core network by a 3GPP technology. Specifically, the terminal may access the core network via a 3GPP access network device.

In the above communication system, the UDM has a function of the unified data management, and is mainly responsible for managing subscription data, user access authorization and other functions.

The PCF has the policy control function, and is mainly responsible for policy decisions related to charging policies for sessions and service flows, and quality of service (QoS) bandwidth guarantees and policies. In this architecture, the PCFs connected to the AMF and the SMF may correspond to a PCF for access and mobility control (AM PCF) and a PCF for session management (SM PCF) respectively. In actual deployment scenarios, the AM PCF and the SM PCF may not be the same PCF entity.

The SMF has the session management function, and is mainly performing a session management, an execution of control policies issued by the PCF, a selection of the UPF, an allocation of internet protocol (IP) addresses of UEs, and other functions.

The AMF has the access and mobility management function, and is mainly performing a mobility management, access authentication/authorization, and other functions. In addition, the AMF is also responsible for transferring user policies between the UE and the PCF.

The UPF is a user plane functional entity. As an interface with a data network, the UPF completes user plane (UP) data forwarding, session/flow-level charging statistics, bandwidth limitations, and other functions.

In addition, functions of interfaces are described as follows:
N7: which is an interface between the PCF and the SMF, and is configured to issue control policies for a packet data unit (PDU) session granularity and a service data flow granularity.
N3: which is a communication interface between the UPF and the NG-RAN.
N15: which is an interface between the PCF and the AMF, and is configured to issue UE policies and access control related policies.
N4: which is an interface between the SMF and the UPF, and is configured to transfer information between the control plane and the UP, including issuing forwarding rules, QoS control rules, traffic statistics rules, and the like for the UP from the control plane, and reporting information from the UP.
N11: which is an interface between the SMF and the AMF, and is configured to transfer PDU session tunneling information between the RAN and the UPF, control messages sent to the UE, radio resource control information sent to the RAN, etc.
N2: which is an interface between the AMF and the RAN, and is configured to transfer radio bearer control information from a core network side to the RAN, etc.
N1: which is an interface between the AMF and the UE, is independent of access, and is configured to transfer QoS control rules to the UE, etc.
N8: which is an interface between the AMF and the UDM, and is used by the AMF to obtain access and mobility management-related subscription data and authentication data from the UDM, and used by the AMF to register current mobility management-related information of the UE from the UDM, etc.
N10: which is an interface between the SMF and the UDM, and is used by the SMF to obtain session management-related subscription data from the UDM, and used by the SMF to register current session-related information of the UE from the UDM, etc.

The above terminal may be a terminal device with a wireless communication function, and may also be referred to as a user equipment (UE). The terminals may be deployed on land, including indoor or outdoor, handheld, wearable or vehicle-mounted terminals; may also be deployed on the water surface, for example, on ships; and may also be deployed in the air, for example, on airplanes, balloons or satellites. The above terminals may be mobile phones, pads, computers with wireless transceiver functions, virtual reality (VR) terminals, augmented reality (AR) terminals, wireless terminals in industrial control, wireless terminals in self-driving, wireless terminals in remote medical, wireless terminals in smart grids, wireless terminals in transportation safety, wireless terminals in smart cities, wireless terminals in smart homes, etc. The terminal may also be a handheld device, a vehicle-mounted device, a wearable device, a computing device, or other processing device connected to a wireless modem with a wireless communication function. Optionally, the terminal may be called different names in different networks, such as a UE, an access terminal, a user unit, a user station, a mobile station, a mobile platform, a remote station, a remote terminal, a mobile device, a user terminal, a terminal device, a wireless communication device, a user agent or user device, a cellular phone, a cordless phone, a session initiation protocol (SIP) phone, a wireless local loop (WLL) station, a personal digital assistant (PDA), a UE in a 5G network or a future evolution network, etc.

The above access network device may be a device on an access network side for supporting a terminal to access a wireless communication system, for example, may be a next generation NodeB (gNB), a transmission reception point (TRP), a relay node, an access point (AP), or the like in the 5G communication system.

It should be noted that, in the communication system shown in FIG. 1, functions and interfaces of each device are merely illustrative, and not all functions of each device are required when applied in the embodiments of the present disclosure. All or some devices of the core network may be physical entities, and may also be virtualized devices, which is not limited here. Certainly, the communication system in the embodiments of the present disclosure may also include other devices not shown in FIG. 1, which are not limited here.

In the communication system, a narrow band Internet of things (NB-IoT) is a low power wide area network (LPWAN) built on cellular networks. As the name suggests, one of main features of the NB-IoT is an ultra-low power consumption. A terminal accessed to the NB-IoT also supports a low power consumption working mode. Currently, the low power consumption working mode includes: a discontinuous reception (DRX) mode, an extended DRX (eDRX) mode, and a power saving mode (PSM). DRX cycles supported by the DRX mode include 1.28 seconds, 2.56 seconds, 5.12 seconds, and 10.24 seconds. As an extension of the DRX mode, eDRX cycles for the eDRX mode may exceed 10.24 seconds, and reach 20.48 seconds or even 2.92 hours.

The UE may have the following three radio resource control (RRC) states: an idle state (RRC_IDLE), a connected state (RRC_CONNECTED), and an inactive state (RRC_INACTIVE). A UE in the connected state may receive and send data. At this time, the UE is considered reachable. A UE in the inactive state cannot receive or send data. At this time, the UE is considered unreachable.

In a research of SA2 of 3GPP, the core network implements a core network based mobile terminal communication (CN based MT communication) function. A basic principle of a CN based MT communication is that the access network device sends eDRX parameters allocated by the RAN side to the core network, so that the core network may learn a reachability of the UE and buffer downlink data. In a case where the UE is reachable on the RAN side, the access network device informs the core network; and in a case where the UE is unreachable on the RAN side, the access network device also informs the core network. In a case where the UE is unreachable on the RAN side, and if the access network device does not timely inform the core network of the unreachability of the UE, the core network may not be able to timely learn of this situation and continue to transmit the downlink data, resulting in data loss.

Currently, no specific provisions are made for a procedure by which the core network obtains the reachability of the UE on the RAN side in the communication standards. For a core network based mobile terminal communication, how to inform the core network of the reachability of the UE is an urgent problem to be solved.

In order to solve the above problem, embodiments of the present disclosure provide a communication method. The communication method may be performed by the above communication system. Illustratively, the first access network device may be a first gNB. It should be noted that the first access network device may also be other access network devices, which is not specifically limited in the embodiments of the present disclosure.

FIG. 2 is a schematic flowchart of a first illustrative embodiment of a communication method in embodiments of the present disclosure. As shown in FIG. 2, the communication method includes step S210.

In the step S210, a core network device sends a first message to a first gNB.

Here, the first message indicates that a UE is expected to enter a connected state from an inactive state. It may be understood that the first message may explicitly or implicitly indicate that the UE is expected to enter the connected state from the inactive state. In one example, the first message may include request information. The request information indicates that the UE is expected to enter the connected state from the inactive state. That is, the request information is used for an explicit indication. In one example, the first message may include indication information. Based on the indication information, the first gNB may confirm that the core network device expects the UE to enter the connected state from the inactive state. That is, the indication information is used for an implicit indication. The indication information may, for example, indicate at least one of: a CN buffer being full, a core network based mobile terminal communication handling, a data amount of data buffered by the core network, the number of downlink data packets expected to be sent included by the core network, time information of downlink data expected to be sent by the core network, or the like. It should be noted that the indication information may also indicate other contents, which is not specifically limited in the embodiments of the present disclosure.

In an embodiment, the core network device may be a network device communicatively connected to the first gNB in the core network. For example, the core network device may be an AMF. For another example, the core network device may be a UPF. It should be noted that the core network devices may also be respectively other network devices on a core network side, which is not specifically limited in the embodiments of the present disclosure.

In a case where the core network device is the AMF, the first message sent by the core network device to the first gNB may be a signaling message exchanged between the first gNB and the AMF. That is, the first message may be included in a signaling exchanged between the first gNB and the AMF. In an embodiment, the first message may be an NGAP message. In this case, the request information and/or the indication information may be included in the NGAP message. The NGAP is used to provide a signaling service between the first gNB and the AMF. The signaling service includes: a non-UE associated service and a UE associated service. The non-UE associated service is used to establish a next generation (NG) interface instance between the first gNB and the AMF. The UE associated service is used to provide signaling and data connections for the UE to access the core network. It may be understood that the non-UE associated service may also be referred to as a non-terminal associated service, and the UE associated service may also be referred to as a terminal associated service.

In an embodiment, the NGAP message may include a non-UE associated message. In one example, the non-UE associated message may include a paging message. The paging message is configured to implement a paging procedure between the AMF and the first gNB. In one example, the paging message may include identification information of the UE. The identification information is configured to uniquely identify the UE. In one example, the identification information may include a UE NGAP identifier (ID). The UE NGAP ID is configured to uniquely identify the UE on an NG interface. For example, the identification information may include an AMF UE NGAP ID and/or an RAN UE NGAP ID. The AMF UE NGAP ID is an identifier allocated by the AMF to the UE, and is configured to identify the UE in the AMF. The RAN UE NGAP ID is an identifier allocated by the RAN to the UE, and is configured to identify the UE in the RAN. Specifically, if the UE NGAP IDs are included in the paging message, the first gNB (i.e., the NG-RAN node) shall, if supported, consider the paging for the corresponding UE as CN-based MT communication handling. Alternatively, if the UE NGAP IDs are included in the paging message, the first gNB (i.e., the NG-RAN node) shall, if supported, take the UE NGAP IDs into account for UE state decision or paging. It should be noted that the first message may also be other messages in the non-UE associated message, which is not specifically limited in the embodiments of the present disclosure.

In an embodiment, the NGAP message may include a UE associated message. In one example, the UE associated message may include a downlink non-access stratum transport (DOWNLINK NAS TRANSPORT) message. The DOWNLINK NAS TRANSPORT message is configured to implement a downlink NAS transport procedure between the AMF and the first gNB. In one example, the DOWNLINK NAS TRANSPORT message may include end indication information. The end indication information may be set to indicate "the core network buffer being full". In this case, after receiving the DOWNLINK NAS TRANSPORT message, the first gNB may consider that the core network expects the UE to enter the connected state according to the end indication information. Alternatively, after receiving the DOWNLINK NAS TRANSPORT message, the first gNB may take the end indication information into account for the UE state decision or paging. It should be noted that the first message may also be other messages in the UE associated message, which is not specifically limited in the embodiments of the present disclosure.

In a case where the core network device is the UPF, the first message sent by the core network device to the first gNB may be a message exchanged between the first gNB and the UPF. That is, the first message may be included in the message exchanged between the first gNB and the UPF. In an embodiment, the first message may be a GTP-U message. In this case, the request information and/or the indication information may be included in the GTP-U message. For example, the request information and/or the indication information may be included in a header of the GTP-U message. It should be noted that the first message may also be other packet or signaling messages exchanged between the first gNB and the UPF, which is not specifically limited in the embodiments of the present disclosure.

At this point, through the step S210, the core network device may send the first message to the first gNB to indicate that the UE is expected to enter the connected state from the inactive state. By sending the first message, the core network device may confirm with the first gNB whether the UE enters the connected state from the inactive state. In this way, the core network device may timely learn the reachability of the UE on the RAN side when needed, so that the downlink data may be buffered to avoid data loss.

Continuing to refer to FIG. 2, in an embodiment, the above communication method may further include step S220.

In the step S220, the first gNB sends a first response message to the core network device.

Here, the first response message indicates whether the UE enters the connected state from the inactive state. Specifically, the first response message may indicate that the UE enters the connected state from the inactive state, or may indicate that the UE does not enter the connected state from the inactive state.

First, after receiving the first message from the core network device in the step S210, the first gNB performs an admission decision. The function of the admission decision is to determine whether the UE enters the connected state from the inactive state. In an embodiment, the first gNB may control the UE to enter the connected state from the inactive state. In a case where the UE fails to enter the connected state, the first gNB may determine that the UE has not entered the connected state from the inactive state. In a case where the UE successfully enters the connected state, the first gNB may determine that the UE enters the connected state from the inactive state. It may be understood that, in this case, the first gNB is actually controlling the UE to enter the connected state. In an embodiment, the first gNB may determine whether the UE enters the connected state from the inactive state according to its own relevant information and/or relevant information of the UE. In a case where it is determined according to the relevant information that the UE cannot enter the connected state, the first gNB may determine that the UE has not entered the connected state from the inactive state. In a case where it is determined according to the relevant information that the UE can enter the connected state, the first gNB may determine that the UE enters the connected state from the inactive state. It may be understood that, in this case, the first gNB does not actually control the UE to enter the connected state. Here, the relevant information of the first gNB may include, but is not limited to, service capabilities, for example, a maximum number of UEs that the first gNB may serve.

Afterwards, after performing the admission decision, the first gNB sends the first response message to the core network device.

In a case where the core network device is the AMF, the first response message sent by the first gNB to the core network device may be a signaling message exchanged between the first gNB and the AMF. That is, the first response message may be included in a signaling exchanged between the first gNB and the AMF. In an embodiment, the first response message may be an NGAP message. The NGAP message may be an existing NGAP message, and may also be a new NGAP message. In one example, the NGAP message may include a non-access stratum non delivery indication (NAS NON DELIVERY INDICATION) message. The NAS NON DELIVERY INDICATION message is configured to implement an NAS non delivery indication procedure between the first gNB and the AMF. Specifically, the NAS non delivery indication procedure is used when the first gNB (i.e., the NG-RAN) is unable to send the UE to the RRC_CONNECTED state after receiving the request, e.g., the CN expecting the UE to enter the RRC_CONNECTED state, from the CN. In one example, the new NGAP message and a corresponding NGAP procedure may be provided to implement a sending of the first response message. It should be noted that the first message may also be other messages in the NGAP message, which is not specifically limited in the embodiments of the present disclosure.

In a case where the core network device is the UPF, the first response message sent by the first gNB to the core network device may be a message exchanged between the first gNB and the UPF. That is, the first response message may be included in the message exchanged between the first gNB and the UPF. In an embodiment, the first response message may be a GTP-U message. It should be noted that the first response message may also be other packet or signaling messages exchanged between the first gNB and the UPF, which is not specifically limited in the embodiments of the present disclosure.

At this point, through the step S220, the first gNB may send the first response message to the core network device to inform whether the UE has entered the connected state from the inactive state. In this way, the core network device may timely learn the reachability of the UE on the RAN side, so that the downlink data may be buffered to avoid the data loss.

In an embodiment, in a case where the UE does not enter the connected state from the inactive state, the first response message may include at least one of: a failure reason or a paging time. The failure reason indicates a reason why the UE cannot enter the connected state from the inactive state. For example, the failure reason may be a gNB overload. The paging time indicates a time when the core network device performs a paging on the UE. Specifically, the paging time may be a paging time recommended by the first gNB. In one example, the first response message may include the failure reason. At this time, the core network device may consider the failure reason when performing the paging on the UE. In one example, the first response message may include the paging time. At this time, the core network device may consider the recommended paging time when performing the paging on the UE. For example, the core network device may perform the paging on the UE again according to the recommended paging time. In one example, the first response message may include the failure reason and the paging time. At this time, the core network device may comprehensively consider the failure reason and the paging time when performing the paging on the UE. It should be noted that the first response message may also include other information, which is not specifically limited in the embodiments of the present disclosure.

Furthermore, in a case where the UE does not enter the connected state from the inactive state, the first gNB may send the failure reason and/or the paging time to the core network device. The core network device may perform the paging on the UE later according to the failure reason and/or the paging time. This may improve a success rate of performing the paging on the UE by the core network device.

In addition, embodiments of the present disclosure also provide a communication method. The communication method may be performed by the above communication system. Illustratively, the first access network device may be a first gNB, and a second access network device may be a second gNB. It should be noted that the first access network device and the second access network device may also be other access network devices, which is not specifically limited in the embodiments of the present disclosure.

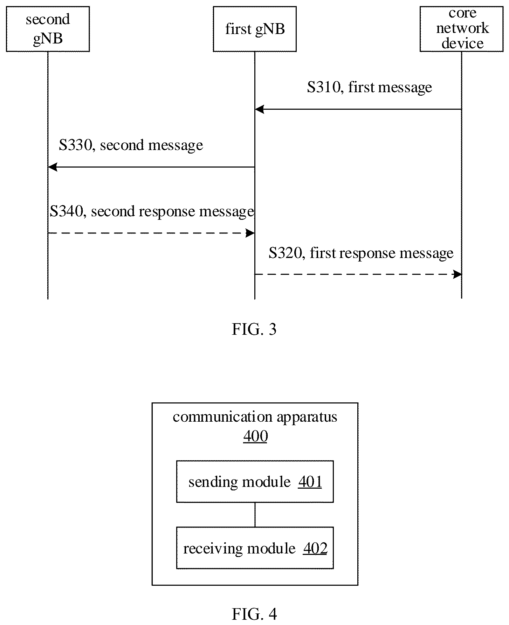

FIG. 3 is a schematic flowchart of a second illustrative embodiment of a communication method in embodiments of the present disclosure. As shown in FIG. 3, the communication method includes steps S310 and S330.

In the step S310, a core network device sends a first message to a first gNB.

Here, the first message indicates that a UE is expected to enter a connected state from an inactive state. It may be understood that the first message may explicitly or implicitly indicate that the UE is expected to enter the connected state from the inactive state. In one example, the first message may include request information. The request information indicates that the UE is expected to enter the connected state from the inactive state. That is, the request information is used for an explicit indication. In one example, the first message may include indication information. Based on the indication information, the first gNB may confirm that the core network device expects the UE to enter the connected state from the inactive state. That is, the indication information is used for an implicit indication. The indication information may, for example, indicate at least one of: a CN buffer being full, a core network based mobile terminal communication handling, a data amount of data buffered by the core network, the number of downlink data packets expected to be sent by the core network, or the like. It should be noted that the indication information may also indicate other contents, which is not specifically limited in the embodiments of the present disclosure.

In an embodiment, the core network device may be a network device communicatively connected to the first gNB in the core network. For example, the core network device may be an AMF. For another example, the core network device may be a UPF. It should be noted that the core network devices may also be respectively other network devices on a core network side, which is not specifically limited in the embodiments of the present disclosure.

In a case where the core network device is the AMF, the first message sent by the core network device to the first gNB may be a signaling message exchanged between the first gNB and the AMF. That is, the first message may be included in a signaling exchanged between the first gNB and the AMF. In an embodiment, the first message may be an NGAP message. In this case, the request information and/or the indication information may be included in the NGAP message. The NGAP is used to provide a signaling service between the first gNB and the AMF. The signaling service includes: a non-UE associated service and a UE associated service. The non-UE associated service is used to establish a next generation interface instance between the first gNB and the AMF. The UE associated service is used to provide signaling and data connections for the UE to access the core network. It may be understood that the non-UE associated service may also be referred to as a non-terminal associated service, and the UE associated service may also be referred to as a terminal associated service.

In an embodiment, the NGAP message may include a non-UE associated message. The non-UE associated message is configured to provide a non-UE associated service. In one example, the non-UE associated message may include a paging message. The paging message is configured to implement a paging procedure between the AMF and the first gNB. In one example, the paging message may include identification information of the UE. The identification information is configured to uniquely identify the UE. In one example, the identification information may include a UE NGAP ID. The UE NGAP ID is configured to uniquely identify the UE on an NG interface. For example, the identification information may include an AMF UE NGAP ID and/or an RAN UE NGAP ID. The AMF UE NGAP ID is an identifier allocated by the AMF to the UE, and is configured to identify the UE in the AMF. The RAN UE NGAP ID is an identifier allocated by the RAN to the UE, and is configured to identify the UE in the RAN. Specifically, if the UE NGAP IDs are included in the paging message, the first gNB (i.e., the NG-RAN node) shall, if supported, consider the paging for the corresponding UE as CN-based MT communication handling. Alternatively, if the UE NGAP IDs are included in the paging message, the first gNB (i.e., the NG-RAN node) shall, if supported, take the paging message into account for UE state decision or paging. It should be noted that the first message may also be other messages in the non-UE associated message, which is not specifically limited in the embodiments of the present disclosure.

In an embodiment, the NGAP message may include a UE associated message. The UE associated message is configured to provide the UE associated service. In one example, the UE associated message may include a DOWNLINK NAS TRANSPORT message. The DOWNLINK NAS TRANSPORT message is configured to implement a downlink NAS transport procedure between the AMF and the first gNB. In one example, the DOWNLINK NAS TRANSPORT message may include end indication information. The end indication information may be set to indicate "the core network buffer being full". In this case, after receiving the DOWNLINK NAS TRANSPORT message, the first gNB may consider that the core network expects the UE to enter the connected state according to the end indication information. Alternatively, after receiving the DOWNLINK NAS TRANSPORT message, the first gNB may take the end indication information into account for the UE state decision or paging. It should be noted that the first message may also be other messages in the UE associated message, which is not specifically limited in the embodiments of the present disclosure.

In a case where the core network device is the UPF, the first message sent by the core network device to the first gNB may be a message exchanged between the first gNB and the UPF. That is, the first message may be included in the message exchanged between the first gNB and the UPF. In an embodiment, the first message may be a GTP-U message. In this case, the request information and/or the indication information may be included in the GTP-U message. For example, the request information and/or the indication information may be included in a header of the GTP-U message. It should be noted that the first message may also be other packet or signaling messages exchanged between the first gNB and the UPF, which is not specifically limited in the embodiments of the present disclosure.

At this point, through the step S310, the core network device may send the first message to the gNB to indicate that the UE is expected to enter the connected state from the inactive state. By sending the first message, the core network device may confirm with the first gNB whether the UE enters the connected state from the inactive state. In this way, the core network device may timely learn the reachability of the UE on the RAN side when needed, so that the downlink data may be buffered to avoid data loss.

In the step S330, the first gNB sends a second message to a second gNB.

Specifically, after receiving the first message in the step S310, the first gNB may send the second message to the second gNB according to the first message. Here, the second message indicates that the UE is expected to enter the connected state from the inactive state. The second gNB may be a gNB other than the first gNB and capable of communicating with the first gNB. In one example, the first gNB and the second gNB may communicate with each other via an Xn interface. It may be understood that the second message may explicitly or implicitly indicate that the UE is expected to enter the connected state from the inactive state. In one example, the second message may include request information. The request information indicates that the UE is expected to enter the connected state from the inactive state. That is, the request information is used for an explicit indication. In one example, the second message may include indication information. Based on the indication information, the second gNB may confirm that the first gNB expects the UE to enter the connected state from the inactive state. That is, the indication information is used for an implicit indication. The indication information may, for example, indicate at least one of: a core network buffer being full, a core network based mobile terminal communication handling, a data amount of data buffered by the core network, the number of downlink data packets expected to be sent by the core network, or the like. It should be noted that the indication information may also indicate other contents, which is not specifically limited in the embodiments of the present disclosure.

In an embodiment, the second message may be a paging message. For example, the second message may be a RAN paging message. In this case, the request information and/or the indication information may be included in the paging message. In an embodiment, the second message may carry a paging reason. Corresponding to the request information, the paging reason may be, for example, that the core network expects the UE to enter the connected state from the inactive state. Corresponding to the indication information, the paging reason may be, for example, the core network buffer being full or the core network based mobile terminal communication handling. In one example, in a case where the indication information carried in the first message received by the first gNB from the core network device indicates that the core network buffer is full, the first gNB may add a paging reason indicating that the core network buffer is full in the paging message sent to the second gNB. In one example, the paging message sent by the first gNB to the second gNB may include a paging cause information element (IE). The information element is optional. That is, the first gNB may add the paging cause information element to the paging message when needed. The paging cause information element may be set to be the core network based mobile terminal communication handling. Specifically, if the paging message (i.e., the RAN PAGING message) includes the paging cause IE set to the CN based MT communication handling, the second gNB (i.e., the NG-RAN node₂) shall, if supported, take the paging cause IE into account for UE state decision or paging. In one example, the paging message sent by the first gNB to the second gNB may include a newly set core network based mobile terminal communication handling information element. The information element is optional. That is, the first gNB may add the core network based mobile terminal communication handling information element to the paging message when needed. The information element may, for example, be set to true or false. In a case where a value is true, the information element indicates that the core network buffer is full, thereby expressing that the core network expects the UE to enter the connected state from the inactive state. Specifically, if the paging message (i.e., the RAN PAGING message) includes the CN based MT communication handling IE, the second gNB (i.e., the NG-RAN node₂) shall, if supported, take the CN based MT communication handling IE into account for UE state decision or paging. First, it should be noted that the second message may also be other messages, and the second message may also carry other information or information elements, which is not specifically limited in the embodiments of the present disclosure.

In an embodiment, the above communication method may further include step S340. In the step S340, the second gNB sends a second response message to the first gNB. Here, the second response message indicates whether the UE enters the connected state from the inactive state.

First, after receiving the second message from the first gNB in the step S330, the second gNB performs an admission decision. The function of the admission decision is to determine whether the UE enters the connected state from the inactive state. In an embodiment, the second gNB may control the UE to enter the connected state from the inactive state. In a case where the UE fails to enter the connected state, the second gNB may determine that the UE has not entered the connected state from the inactive state. In a case where the UE successfully enters the connected state, the second gNB may determine that the UE enters the connected state from the inactive state. It may be understood that, in this case, the second gNB is actually performing a paging on the UE. Then, the request information carried in the second message may also be considered in the paging. In an embodiment, the second gNB may determine whether the UE enters the connected state from the inactive state according to its own relevant information and/or relevant information of the UE. In a case where it is determined according to the relevant information that the UE cannot enter the connected state, the second gNB may determine that the UE has not entered the connected state from the inactive state. In a case where it is determined according to the relevant information that the UE can enter the connected state, the second gNB may determine that the UE enters the connected state from the inactive state. It may be understood that, in this case, the second gNB does not actually control the UE to enter the connected state. Here, the relevant information of the second gNB may include, but is not limited to, service capabilities, for example, a maximum number of UEs that the second gNB may serve.

Afterwards, after performing the admission decision, the second gNB sends the second response message to the first gNB.

Apparently, through the steps S330 and S340, the first gNB may send the second message to the second gNB and receive the second response message from the second gNB in response to the first message, thereby confirming whether the UE enters the connected state from the inactive state at the second gNB. In this way, the first gNB may timely learn the reachability of the UE at the second gNB and inform the core network device of it.

In an embodiment, in a case where the UE does not enter the connected state from the inactive state, the second response message may include at least one of: a failure reason or a paging time. The failure reason indicates a reason why the UE cannot enter the connected state from the inactive state. For example, the failure reason may be a gNB overload. The paging time indicates a time for performing a paging on the UE. Specifically, the paging time may be a paging time recommended by the second gNB. In one example, the second response message may include the failure reason. In one example, the second response message may include the paging time. At this time, the recommended paging time may be considered when the paging is performed on the UE. For example, the paging on the UE may be performed again according to the recommended paging time. In one example, the second response message may include the failure reason and the paging time. At this time, the failure reason and the paging time may be comprehensively considered when the paging is performed on the UE. In one example, the second response message may be an Xn application protocol (XnAP) message, where the XnAP message is an ACTIVITY NOTIFICATION message transmission. It should be noted that the second response message may also include other information, which is not specifically limited in the embodiments of the present disclosure.

In one example, in a case where the ACTIVITY NOTIFICATION message includes information indicating that the UE fails to enter the connected state, the first gNB may consider that an RAN paging on the UE is successful but the UE fails to enter the connected state, and the first gNB may notify the core network.

Furthermore, in a case where the UE does not enter the connected state from the inactive state, the second gNB may send the failure reason and/or the paging time to the first gNB. The first gNB may then report and save the failure reason and/or the paging time from the second gNB locally, or report the failure reason and/or the paging time to the core network device so as to facilitate subsequent paging on the UE. This may improve a success rate of performing the paging on the UE by the core network device.

Continuing to refer to FIG. 3, in an embodiment, the above communication method may further include step S320.

In the step S320, the first gNB sends a first response message to the core network device.

Here, the first response message indicates whether the UE enters the connected state from the inactive state. Specifically, the first response message may indicate that the UE enters the connected state from the inactive state, or may indicate that the UE does not enter the connected state from the inactive state.

First, after receiving the second response message from the second gNB in the step S340, the first gNB may determine whether the UE enters the connected state from the inactive state according to the second response message.

In a case where the core network device is the AMF, the first response message sent by the first gNB to the core network device may be a signaling message exchanged between the first gNB and the AMF. That is, the first response message may be included in a signaling exchanged between the first gNB and the AMF. In an embodiment, the first response message may be an NGAP message. The NGAP message may be an existing NGAP message, and may also be a new NGAP message. In one example, the NGAP message may include a NAS NON DELIVERY INDICATION message. The NAS NON DELIVERY INDICATION message is configured to implement an NAS non delivery indication procedure between the first gNB and the AMF. Specifically, the NAS non delivery indication procedure is used when the first gNB (i.e., the NG-RAN) is unable to send the UE to the RRC_CONNECTED state after receiving the request, e.g., the CN expecting the UE to enter the RRC_CONNECTED state, from the CN. In one example, the new NGAP message and a corresponding NGAP procedure may be provided to implement a sending of the first response message. It should be noted that the first message may also be other messages in the NGAP message, which is not specifically limited in the embodiments of the present disclosure.

In a case where the core network device is the UPF, the first response message sent by the first gNB to the core network device may be a message exchanged between the first gNB and the UPF. That is, the first response message may be included in the message exchanged between the first gNB and the UPF. In an embodiment, the first response message may be a GTP-U message. It should be noted that the first response message may also be other packet or signaling messages exchanged between the first gNB and the UPF, which is not specifically limited in the embodiments of the present disclosure.

At this point, through the step S320, the first gNB may send the first response message to the core network device to inform whether the UE has entered the connected state from the inactive state. In this way, the core network device may timely learn the reachability of the UE on the RAN side, so that the downlink data may be buffered to avoid the data loss.

In an embodiment, in a case where the UE does not enter the connected state from the inactive state, the first response message may include at least one of: a failure reason or a paging time. The failure reason indicates a reason why the UE cannot enter the connected state from the inactive state. For example, the failure reason may be a gNB overload. The paging time indicates a time when the core network device performs a paging on the UE. Specifically, the paging time may be a paging time recommended by the first gNB and/or a paging time recommended by the second gNB. In one example, the first response message may include the failure reason. At this time, the core network device may consider the failure reason when performing the paging on the UE. In one example, the first response message may include the paging time. At this time, the core network device may consider the recommended paging time when performing the paging on the UE. For example, the core network device may perform the paging on the UE again according to the recommended paging time. In one example, the first response message may include the failure reason and the paging time. At this time, the core network device may comprehensively consider the failure reason and the paging time when performing the paging on the UE. It should be noted that the first response message may also include other information, which is not specifically limited in the embodiments of the present disclosure.

Furthermore, in a case where the UE does not enter the connected state from the inactive state, the first gNB may send the failure reason and/or the paging time to the core network device. The core network device may perform the paging on the UE later according to the failure reason and/or the paging time. This may improve a success rate of performing the paging on the UE by the core network device.

It may be understood that, in the embodiments shown in FIG. 2, the first gNB may determine whether the UE enters the connected state from the inactive state via its own admission decision; and in the embodiments shown in FIG. 3, the first gNB may learn from the second gNB whether the UE enters the connected state from the inactive state. In practice, the embodiments shown in FIG. 2 and FIG. 3 may be combined. For example, the first gNB may both perform the admission decision and confirm to the second gNB. Specifically, the first gNB may first perform the admission decision, and if the admission decision fails, confirm to the second gNB; or the first gNB may confirm to the second gNB and, if a confirmation fails, perform the admission decision; or the first gNB may simultaneously perform the admission decision and confirm to the second gNB. This is not specifically limited in the embodiments of the present disclosure.

Based on the same inventive concept, embodiments of the present disclosure also provide a communication apparatus. The communication apparatus may be the access network device (such as the first gNB, or the second gNB) or the core network device in the above communication system, and may also be a chip or a system on a chip in the access network device or the core network device, and may also be a functional module in the access network device or the core network device for implementing the methods according to the above embodiments. The communication apparatus may implement functions performed by the access network device or the core network device in the above embodiments, and these functions may be implemented by hardware executing corresponding software. These hardware or software include one or more modules corresponding to the above functions.

FIG. 4 is a schematic block diagram of a communication apparatus in embodiments of the present disclosure. As shown in FIG. 4, the communication apparatus 400 may include a sending module 401 and a receiving module 402.

In an embodiment, the above communication apparatus 400 may be applied to a first access network device. The receiving module 402 is configured to receive a first message from a core network device. The first message indicates that a UE is expected to enter a connected state from an inactive state.

In one or more possible implementations, the sending module 401 is configured to send a first response message to the core network device according to the first message. The first response message indicates whether the UE enters the connected state from the inactive state.

In one or more possible implementations, in a case where the first response message indicates that the UE has not entered the connected state from the inactive state, the first response message may include at least one of: a failure reason or a paging time. The failure reason indicates a reason why the UE cannot enter the connected state from the inactive state. The paging time indicates a time when the core network device performs a paging on the UE.

In one or more possible implementations, the first message may be one of: an NGAP message or a GTP-U message.

In one or more possible implementations, the NGAP message may include a non-UE associated message.

In one or more possible implementations, the non-UE associated message may include a paging message.

In one or more possible implementations, the NGAP message may include a UE associated message.

In one or more possible implementations, the UE associated message may include a downlink non-access stratum transmission message.

In one or more possible implementations, the first response message may be one of: an NGAP message or a GTP-U message.

In one or more possible implementations, the sending module 401 may be further configured to send a second message to a second access network device according to the first message. The second message indicates that the UE is expected to enter the connected state from the inactive state.

In one or more possible implementations, the receiving module 402 may be further configured to receive a second response message sent by the second access network device in response to the second message. The second response message indicates whether the UE enters the connected state from the inactive state.

In one or more possible implementations, the second message may be a paging message, and the second message may include a paging reason. The paging reason is the UE being expected to enter the connected state from the inactive state.

In one or more possible implementations, the second message may be a paging message, and the second message may include indication information. The indication information indicates that the UE is expected to enter the connected state from the inactive state.

In an embodiment, the above communication apparatus 400 may be applied to a core network device. The sending module 401 is configured to send a first message to a first access network device. The first message indicates that a UE is expected to enter a connected state from an inactive state.

In one or more possible implementations, the receiving module 402 is configured to receive a first response message sent by the first access network device in response to the first message. The first response message indicates whether the UE enters the connected state from the inactive state.

In one or more possible implementations, in a case where the first response message indicates that the UE has not entered the connected state from the inactive state, the first response message may include at least one of: a failure reason or a paging time. The failure reason indicates a reason why the UE cannot enter the connected state from the inactive state. The paging time indicates a time when the core network device performs a paging on the UE.

In one or more possible implementations, the first message may be one of: an NGAP message or a GTP-U message.

In one or more possible implementations, the NGAP message may include a non-UE associated message.

In one or more possible implementations, the non-UE associated message may include a paging message.

In one or more possible implementations, the NGAP message may include a UE associated message.

In one or more possible implementations, the UE associated message may include a downlink non-access stratum transmission message.

In one or more possible implementations, the first response message may be one of: an NGAP message or a GTP-U message.

In an embodiment, the above communication apparatus 400 may be applied to a second access network device. The receiving module 402 is configured to receive a second message from a first access network device. The second message indicates that a UE is expected to enter a connected state from an inactive state.

In one or more possible implementations, the sending module 401 is configured to send a second response message to the first access network device according to the second message. The second response message indicates whether the UE enters the connected state from the inactive state.

In one or more possible implementations, the second message may be a paging message, and the second message may include a paging reason. The paging reason is the UE being expected to enter the connected state from the inactive state.

In one or more possible implementations, the second message may be a paging message, and the second message may include indication information. The indication information indicates that the UE is expected to enter the connected state from the inactive state.

It should be noted that the communication apparatus in the embodiments of the present disclosure corresponds to the communication method in the aforementioned embodiments. Therefore, for specific implementation details of the communication apparatus in the embodiments of the present disclosure, reference may be made to the description of the aforementioned embodiments of the communication method, which will not be repeated here.

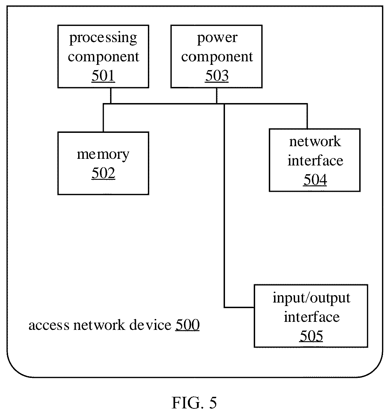

Based on the same inventive concept, embodiments of the present disclosure provide a network device. The network device may be the access network device and/or the core network device in one or more of the above embodiments. FIG. 5 is a schematic block diagram of a network device in embodiments of the present disclosure. As shown in FIG. 5, the network device may include a processing component 501 and a memory resource represented by a memory 502. The processing component 501 may further include one or more processors. The memory 502 is configure to store instructions executable by the processing component 501, such as an application program. The application program stored in the memory 502 may include one or more modules. Each module corresponds to a set of instructions. In addition, the processing component 501 is configured to execute the instructions to perform the aforementioned communication method performed by the first access network device, the second access network device, or the core network device.

The network device 500 may further include a power component 503, a wired or wireless network interface 504, and an input/output (I/O) interface 505. The power component 503 is configured to perform a power management of the network device 500. The network interface 504 is configured to connect the network device 500 to a network. The network device 500 may operate an operating system stored in the memory 502, such as Windows Server^{™}, Mac OS X^{™}, Unix^{™}, Linux^{™}, FreeBSD^{™}, etc.

Based on the same inventive concept, embodiments of the present disclosure also provide a computer-readable storage medium. The computer-readable storage medium has stored thereon instructions that, when executed on a computer, may perform the communication method of a first access network device side, a second access network device side or a core network device side in one or more of the above embodiments.

Based on the same inventive concept, embodiments of the present disclosure also provide a computer program or a computer program product. The computer program product, when executed on a computer, enables the computer to implement the communication method of a first access network device side, a second access network device side or a core network device side in one or more of the above embodiments.

Other embodiments of the present disclosure will be apparent to those skilled in the art from consideration of the specification and practice of the present disclosure disclosed herein. The present disclosure is intended to cover any variations, uses or adaptations of the present disclosure following the general principles thereof and including such departures from the present disclosure as come within known or customary practice in the art. It is intended that the specification and embodiments be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A communication method, performed by a first access network device, and comprising:
receiving a first message from a core network device, wherein the first message indicates that a user equipment (UE) is expected to enter a connected state from an inactive state.

2. The method according to claim 1, further comprising:
sending a first response message to the core network device according to the first message, wherein the first response message indicates whether the UE enters the connected state from the inactive state.

3. The method according to claim 2, wherein in a case where the first response message indicates that the UE has not entered the connected state from the inactive state, the first response message comprises at least one of:
a failure reason indicating a reason why the UE cannot enter the connected state from the inactive state; or
a paging time indicating a time when the core network device performs a paging on the UE.

4. The method according to claim 1, wherein the first message is one of: a next generation application protocol (NGAP) message or a user plane part of general packet radio service tunneling protocol (GTP-U) message.

5. The method according to claim 4, wherein the NGAP message comprises a non-UE associated message.

6. The method according to claim 5, wherein the non-UE associated message comprises a paging message.

7. The method according to claim 4, wherein the NGAP message comprises a UE associated message.

8. The method according to claim 7, wherein the UE associated message comprises a downlink non-access stratum transmission message.

9. The method according to claim 3, wherein the first response message is one of: an NGAP message or a GTP-U message.

10. The method according to claim 1, further comprising:
sending a second message to a second access network device according to the first message, wherein the second message indicates that the UE is expected to enter the connected state from the inactive state.

11. The method according to claim 10, further comprising:
receiving a second response message sent by the second access network device in response to the second message, wherein the second response message indicates whether the UE enters the connected state from the inactive state.

12. The method according to claim 10, wherein the second message is a paging message, and the second message comprises a paging reason,
wherein the paging reason is the UE being expected to enter the connected state from the inactive state.

13. The method according to claim 10, wherein the second message is a paging message, and the second message comprises indication information,
wherein the indication information indicates that the UE is expected to enter the connected state from the inactive state.

14. A communication method, performed by a core network device, and comprising:
sending a first message to a first access network device, wherein the first message indicates that a user equipment (UE) is expected to enter a connected state from an inactive state.

15. The method according to claim 14, further comprising:
receiving a first response message sent by the first access network device in response to the first message, wherein the first response message indicates whether the UE enters the connected state from the inactive state.

16. The method according to claim 15, wherein in a case where the first response message indicates that the UE has not entered the connected state from the inactive state, the first response message comprises at least one of:
a failure reason indicating a reason why the UE cannot enter the connected state from the inactive state; or
a paging time indicating a time when the core network device performs a paging on the UE.

17. The method according to claim 14, wherein the first message is one of: a next generation application protocol (NGAP) message or a user plane part of general packet radio service tunneling protocol (GTP-U) message.

18. The method according to claim 17, wherein the NGAP message comprises a non-UE associated message.

19. The method according to claim 18, wherein the non-UE associated message comprises a paging message.

20. The method according to claim 17, wherein the NGAP message comprises a UE associated message.

21. The method according to claim 20, wherein the UE associated message comprises a downlink non-access stratum transmission message.

22. The method according to claim 15 or 16, wherein the first response message is one of: an NGAP message or a GTP-U message.

23. A communication method, performed by a second access network device, and comprising:
receiving a second message from a first access network device, wherein the second message indicates that a user equipment (UE) is expected to enter a connected state from an inactive state.

24. The method according to claim 23, further comprising:
sending a second response message to the first access network device according to the second message, wherein the second response message indicates whether the UE enters the connected state from the inactive state.

25. The method according to claim 23, wherein the second message is a paging message, and the second message comprises a paging reason,
wherein the paging reason is the UE being expected to enter the connected state from the inactive state.

26. The method according to claim 23, wherein the second message is a paging message, and the second message comprises indication information,
wherein the indication information indicates that the UE is expected to enter the connected state from the inactive state.

27. A communication apparatus, comprising:
a receiving module configured to receive a first message from a core network device, wherein the first message indicates that a user equipment (UE) is expected to enter a connected state from an inactive state.

28. A communication apparatus, comprising:
a sending module configured to send a first message to a first access network device, wherein the first message indicates that a user equipment (UE) is expected to enter a connected state from an inactive state.

29. A communication apparatus, comprising:
a receiving module configured to receive a second message from a first access network device, wherein the second message indicates that a user equipment (UE) is expected to enter a connected state from an inactive state.

30. A communication device, comprising:
a memory configured to store computer-executable instructions; and
a processor connected to the memory,
wherein the processor is configured to execute the computer-executable instructions stored on the memory to implement the communication method according to any one of claims 1 to 13, or the communication method according to any one of claims 23 to 26.

31. A communication device, comprising:
a memory configured to store computer-executable instructions; and
a processor connected to the memory,
wherein the processor is configured to execute the computer-executable instructions stored on the memory to implement the communication method according to any one of claims 14 to 22.

32. A computer storage medium having stored thereon computer-executable instructions that, after executed by a processor, enable the communication method according to any one of claims 1 to 26 to be implemented.

33. A communication system, comprising:
a first access network device configured to execute the method according to any one of claims 1 to 13;
a second access network device configured to execute the method according to any one of claims 23 to 26; and
a core network device configured to execute the method according to any one of claims 14 to 22.
